# EUROPÄISCHE PATENTSCHRIFT

(11) **EP 3 351 053 B1**
(45) Veröffentlichungstag und Bekanntmachung des Hinweises auf die Patenterteilung: **22.04.2020**
(21) Anmeldenummer: 16777543.6
(22) Anmeldetag: 14.09.2016
(51) Int. Cl.: H05B 1/02, H05B 3/00

(54) **INFRAROTHEIZUNG**
INFRARED HEATER
CHAUFFAGE INFRAROUGE

(30) Priorität: 16.09.2015 DE 102015115628
(43) Veröffentlichungstag der Anmeldung: 25.07.2018
(73) Patentinhaber: Förster, Rainer, 44229 Dortmund (DE)
(72) Erfinder: Förster, Rainer, 44229 Dortmund (DE)
(74) Vertreter: Meinke, Jochen
(86) Internationale Anmeldenummer: PCT/EP2016/071668
(87) Internationale Veröffentlichungsnummer: WO 2017/046149

(56) Entgegenhaltungen:
- EP-A1- 2 716 327
- DE-A1- 10 110 142
- DE-B3-102012 020 870
- US-A- 2 535 393
- US-A1- 2011 036 950

## Beschreibung

Die Erfindung betrifft eine Infrarotheizung mit wenigstens einem Infrarotstrahler, der in einem Gehäuse angeordnet ist, wobei das Gehäuse eine Frontplatte aufweist.

Eine Infrarotheizung ist aus DE 298 04 666 U1 bekannt. Bei dieser Infrarotheizung sind drei Infrarotstrahler in einem Gehäuse angeordnet, wobei jeder Infrarotstrahler zylindrisch ausgebildet ist. Das Gehäuse besteht aus fünf Aluminium-Platten, wobei die Stirnseite des Gehäuses eine Öffnung aufweist und die Infrarotstrahler für einen Nutzer sichtbar sind. Solche Infrarotheizungen werden zur Temperaturregelung in Wohnräumen eingesetzt, da viele Menschen die direkte Wärmestrahlung als sehr angenehm empfinden. Da die Wärmeenergie nicht über die Luft per Konvektion transportiert wird, sondern per Wärmestrahlung, entfällt eine längere Heizperiode des Raumes und man spürt die Wärme sofort.

Nachteilig bei dieser Infrarotheizung ist jedoch der relativ kleine Raumwinkel, der mit der Infrarotstrahlung durchflutet wird. Da die Strahlung hauptsächlich aus der stirnseitigen Öffnung des Gehäuses austritt, kann eine solche Infrarotheizung nicht genutzt werden, um einen ganzen Raum gleichmäßig aufzuwärmen. Ein weiterer Nachteil ist, dass die Infrarotstrahler zylindrisch ausgebildet sind und somit die Strahlung in alle Raumrichtungen isotrop emittieren. Dadurch wird das Gehäuse der Infrarotheizung unnötig aufgeheizt und benötigt eine aufwendige Wasserkühlung, um thermische Schäden zu vermeiden. Ferner ist die offene Stirnseite des Gehäuses nachteilig, da die Infrarotstrahler nicht nur Infrarotstrahlung emittieren, sondern auch Strahlung im sichtbaren Wellenlängenbereich erzeugen, die den Nutzer der Infrarotheizung blendet.

Eine Infrarotheizung mit den Merkmalen des Oberbegriffs des Patentanspruchs 1 ist aus DE 101 10 142 A1 bekannt. Diese Infrarotheizung weist jedoch nur einen einzigen Infrarotstrahler auf. Aus DE 10 2012 020870 B3 ist eine Infrarotheizung für den Innenraum eines Fahrzeuges bekannt, die nur einen Infrarotstrahler mit einer ebenflächigen Abstrahloberfläche und ein Reflektorgehäuse aufweist, wobei das Reflektorgehäuse so ausgebildet ist, dass die Infrarotstrahlung in eine Richtung senkrecht zur Infrarotstrahlung fokussiert wird. Aus EP 2 716 327 A1 ist ein Infrarotstrahler mit einem Gehäuse und einem Filterglas als Frontplatte bekannt.

Aus US 2 535 393 A ist eine Infrarotheizung zur therapeutischen Verwendung bekannt, die mehrere Infrarotstrahler mit ebenflächiger Abstrahloberfläche aufweist. Die Infrarotstrahler sind so in einem Gehäuse angeordnet, dass die gesamte Infrarotstrahlung in eine Richtung konzentriert wird. Aus US 2011/036950 A1 ist ein Heizsystem zum Enteisen eines Flugzeugflügels mit mehreren Infrarotstrahlern bekannt.

Aufgabe der Erfindung ist es, eine Infrarotheizung der eingangs bezeichneten Art anzugeben, die möglichst den ganzen Raum mit Infrarotstrahlung durchflutet und eine aufwendige Wasserkühlung des Gehäuses vermeidet. Ferner hat die Erfindung die Aufgabe, eine Blendung der Nutzer durch die entstehende Strahlung im sichtbaren Bereich zu vermeiden.

Diese Aufgabe wird bei einer Infrarotheizung der eingangs bezeichneten Art erfindungsgemäß mit den Merkmalen des Patentanspruchs 1 gelöst.

Es wird somit eine Infrarotheizung zur Verfügung gestellt, die einen besonders großen Raumwinkel mit Infrarotstrahlung ausstrahlt, da die einzelnen Infrarotstrahler so angeordnet sind, dass sich ihre Strahlen kreuzen und somit einen sehr divergenten Gesamtstrahl erzeugen, der gut geeignet ist, um einen Wohnraum gleichmäßig zu erwärmen. Da die einzelnen Infrarotstrahler so ausgelegt sind, dass der Hauptteil der Strahlung in Richtung der Fronplatte ausgesendet wird, heizt sich das Gehäuse kaum auf, so dass auf eine aufwendige und teure Wasserkühlung verzichtet werden kann. Eine bevorzugte Auslegung sieht hierfür vor, dass die Infrarotstrahler eine rechteckige Grundform aufweisen, also keine Röhren sind, wobei der Hauptteil der Infrarotstrahlung über eine ebenflächige Abstrahloberfläche in Richtung der Frontplatte emittiert wird. Unter dem Hauptteil der Strahlung ist ein Anteil von mehr als 80 % der Gesamtstrahlungsleistung eines einzelnen Infrarotstrahlers zu verstehen. Die Frontplatte, die z.B. aus einem optischen Filter, Schiefer oder Keramik bestehen kann, absorbiert die sichtbare Strahlung und verhindert ein Blenden eines Nutzers. Es ist bevorzugt vorgesehen, dass jeder Infrarotstrahler als Hohlstrahler ausgebildet ist und eine Strahlungsleistung von ungefähr 400 W aufweist. Die Infrarotstrahler können auch aus Keramik sein.

Besonders bevorzugt ist es, dass das Gehäuse der Infrarotheizung einen trapezartigen Grundriss aufweist, wobei die Frontplatte entlang der längeren Grundseite angeordnet ist und die Infrarotstrahler an den kürzeren Gehäuseseiten angeordnet sind. Dies hat den Vorteil, dass die Infrarotheizung problemlos in einer Raumecke angebracht werden kann und folglich einen maximalen Raumwinkel ausstrahlt. Da die Infrarotstrahler an den Gehäuseseiten angeordnet sind, entfallen auch spezielle Halterungen und der Aufbau der Infrarotheizung bleibt kompakt.

Als besonders vorteilhafte weitere Ausführung ist vorgesehen, dass zwischen den Gehäuseseiten und den Infrarotstrahlern Infrarotreflektoren angeordnet sind. Der kleine Anteil der Strahlung, der zum Gehäuse emittiert wird, wird somit in Richtung der Frontplatte gelenkt. Auch die Infrarotstrahlung, die teilweise an der Frontplatte zurück ins Gehäuse reflektiert wird, wird der Frontplatte über Mehrfachreflektionen wieder zugeführt. Da durch die Infrarotreflektoren ein größerer Teil der Strahlung in den Raum transportiert wird, steigt die Effektivität der Infrarotheizung. Es ist bevorzugt, dass die Infrarotreflektoren als Wellbleche ausgestaltet sind.

Eine weitere Ausführungsform der Erfindung sieht vor, dass die Frontplatte die Infrarotstrahlung vollständig absorbiert. Dadurch steigt die Temperatur der Frontplatte schnell an, die dann selbst wiederum Infrarotstrahlung emittiert. Vorteilhaft hierbei ist, dass beim Abschalten der Infrarotstrahler die Frontplatte noch eine gewisse Zeit nachstrahlt, bis die gespeicherte Wärmenergie in Form von Infrarotstrahlung abgegeben ist. Diese Ausführungsform bietet sich für Räume an, in denen der Aufenthalt kurzweilig ist, z.B. Kellerräume.

Besonders bevorzugt ist es, dass die Frontplatte die Infrarotstrahlung teilweise absorbiert. Dabei wird ein Teil der Strahlung, der auf die Frontplatte auftrifft, absorbiert und ein anderer Teil wird transmittiert. Die absorbierte Strahlung erhitzt die Frontplatte, wobei diese beim Abkühlen selbst Infrarotstrahlung erzeugt. Die transmittierte Strahlung hingegen breitet sich im Raum aus und erwärmt die darin befindlichen Objekte, wie z.B. Menschen, Wohnungsgegenstände oder Wohnungswände. Diese Ausführungsform ist bestens geeignet für Wohnräume, da durch die transmittierte Strahlung eine sofortige Erwärmung gewährleistet ist und beim Abschalten der Infrarotstrahler der Nachstrahleffekt der Frontplatte genutzt wird. Weiter kann diese Infrarotheizung auch in Büros, Krankenhäusern, Kirchen, Schulen, Universitäten, Produktionshallen, Ein- und Mehrfamilienhäusern eingesetzt werden.

Ferner ist diese Ausführungsform der Infrarotheizung für Allergiker eine optimale Lösung, da die Wärme zum größten Teil über Strahlen transportiert wird und dabei kein Hausstaub aufgewirbelt wird. Ein weiterer Nutzen einer solchen Infrarotheizung liegt im medizinischen Bereich, wobei die Wärmestrahlen, die einige Millimeter ins menschliche Gewebe eindringen, zu einer besseren Durchblutung des Gewebes führen und z.B. in der Schmerztherapie eingesetzt werden.

Als weitere Ausführungsform der Erfindung ist vorgesehen, dass die Frontplatte für Infrarotstrahlung vollständig durchlässig ist. Da sich hier die Strahlungsenergie vollständig und sofort ausbreiten kann, ist diese Ausführungsform im Freien vorteilhaft, um eines schnelles Erwärmen von Personen zu erreichen.

Weiterhin ist bevorzugt, dass die Infrarotheizung eine Taktschaltung aufweist, die die Infrarotstrahler periodisch an- und ausschaltet, wobei die Periodendauer frei wählbar ist. Mit der Taktschaltung wird ein Überheizen der Infrarotheizung verhindert und zusätzlich werden Betriebskosten eingespart. Hierzu wird der Nachstrahleffekt der Frontplatte genutzt. Erreicht die Frontplatte eine vorher bestimmte Temperatur, die eindeutig über die Bestrahlungszeit bestimmbar ist, schalten sich die Infrarotstrahler ab und nur noch die Strahlung der Frontplatte wird an den Raum abgegeben. Nach einer gewissen Zeitspanne unterschreitet die Frontplatte eine Mindesttemperatur und die Infrarotstrahler schalten sich wieder ein. Die Regelung der Periodendauer kann durch einen Schalter, der aus Bimetall ist, erfolgen. Übersteigt die Infrarotheizung eine vorgegebene Grenztemperatur im Gehäuseinnenraum, unterbricht der Schalter aus Bimetall durch eine Formänderung die Spannungsversorgung der Infrarotheizung. Anschließend kühlen die Infrarotheizung und der Schalter leicht, jedoch nicht vollständig ab. Die Abkühlung bewirkt eine weitere Formänderung des Schalter, die wieder zu einer Spannungsversorgung der Infrarotheizung führt, da die Unterbrechung wieder aufgehoben wird. Die Grenztemperatur kann entweder direkt an der Infrarotheizung oder mit einer optionalen Funkfernbedienung eingestellt werden. Hierfür kann ein weiterer Schalter vorgesehen sein, der den Spannungsversorgungskreis unterbricht, wenn der Bimetall-schalter den Schalter kontaktiert. Der Abstand zwischen beiden Schaltern kann über ein Stellmittel geändert werden. Je größer der Abstand zwischen den Schaltern ist, desto höher ist die Grenztemperatur.

Eine weitere Ausführungsform der Erfindung sieht vor, dass die Infrarotheizung einen Temperaturfühler aufweist, der die Raumtemperatur an die Infrarotheizung übermittelt, z.B. per Funk. Der Temperaturfühler selbst kann an der Infrarotheizung oder aber auch an einem beliebigen Ort im Raum angebracht sein. Ein Regelkreis moduliert die Taktschaltung in einer geeigneten Weise, so dass sich die entsprechende Raumtemperatur einstellt, die z.B. mit einer App per Mobiltelefon oder Tablet vorgegeben wird.

Weiterhin ist bevorzugt, dass das Gehäuse der Infrarotheizung Belüftungsschlitze aufweist. Durch die Belüftungsschlitze kann aufgeheizte Luft aus den Gehäuseinneren entweichen und eine Überhitzung der Infrarotheizung vermeiden. Ferner kann ein Bruchteil der Infrarotstrahlung über diese Belüftungsschlitze ungehindert und direkt in den Wohnraum propagieren.

Es ist bevorzugt vorgesehen, dass in dem Gehäuse ein Temperaturregler angeordnet ist, der die im Gehäuse entstehende Temperatur regelt. Bei Infrarotheizungen, die im Gegensatz zu konventionellen Heizungen die Raumluft nicht erhitzen, ist es wenig sinnvoll, die Raumtemperatur außerhalb der Infrarotheizung als Regelgröße zu nutzen. Der Temperaturregler regelt die Temperatur im Gehäuseinnenraum so, dass die von einer Person, die der Infrarotheizung ausgesetzt ist, gefühlte Temperatur einen optimalen Wert zwischen 20° und 30° erreicht. Es wurde experimentell festgestellt, dass dieser optimale Bereich der gefühlten Temperatur eintritt, wenn die Temperatur im Gehäuseinnenraum zwischen 90° und 180° liegt. Daher regelt bzw. steuert der Temperaturregler die Temperatur im Gehäuse stetig so, dass diese immer im Bereich zwischen 90° und 180° liegt. Dabei ist es wichtig festzustellen, dass der Temperaturregler einen geeigneten Sensor zur Messung der Temperatur aufweist und der gesamte Temperaturregler zwischen einem Infrarotstrahler und dem Gehäuse angeordnet ist, so dass der Sensor bzw. Temperaturregler nicht durch die Infrarotstrahlung aufgeheizt wird, sondern nur durch die im Gehäuseinnenraum befindlichen Lufttemperatur.

Eine weitere Ausführungsform der Erfindung sieht vor, dass der Temperaturregler einen Bimetall-Schalter aufweist, der ab einer vordefinierten Grenztemperatur im Gehäuseinnenraum die Spannungsversorgung der Infrarotstrahler unterbricht. Die Grenztemperatur liegt dabei im Bereich zwischen 90° und 180° und kann an die klimatischen Gegebenheiten vor Ort variabel eingestellt werden.

Es ist besonders bevorzugt vorgesehen, dass die Infrarotstrahler pro Stunde nicht länger als 20 Minuten eingeschaltet sind, um möglichst wenig Energie zu verbrauchen.

Eine weitere bevorzugte Ausgestaltung sieht vor, dass das Gehäuse eine Kunststoffschicht aufweist. Diese Kunststoffschicht, die einen geringeren Wärmeleitko effizienten aufweist als die handelsüblichen Metalle, wird dafür genutzt, dass das Gehäuse der Infrarotheizung eine bestimmte Temperatur nicht überschreitet. Angedacht ist hier, dass die Temperatur des Gehäuses beim Betrieb der Infrarotheizung einen Wert von 80° nicht übersteigt.

Ferner ist die Verwendung einer erfindungsgemäßen Infrarotheizung an oder in einem Kraftfahrzeug vorgesehen. Die heutigen Kraftfahrzeuge nutzen die Abwärme des Motors, um eine Beheizung des Innenraumes des Kraftfahrzeuges zu ermöglichen. Da es gesellschaftlich gewollt ist, dass in der nahen Zukunft ein überwiegender Teil der Kraftfahrzeuge elektrisch betrieben ist, stellt sich die Frage, wie ein solches Kraftfahrzeug ohne Abwärme eines Motors an kalten Tagen beheizt werden soll, ohne dass die Heizungsanlage einen Großteil der Energie des Akkumulators verbraucht. Dieses Problem lässt sich durch die erfindungsgemäße Infrarotheizung lösen, die nur sehr wenig Energie verbraucht, um die gefühlte Temperatur der Fahrzeuginsassen auf einen optimalen Wert zwischen 16° und 30° zu bringen.

Weiterhin ist vorgesehen, dass die Spannungsversorgung der Infrarotheizung über einen Akkumulator erfolgt. Hier kann es sich entweder um den Akkumulator des Kraftfahrzeuges oder um einen zusätzlichen Akkumulator handeln. Beim zusätzlichen Akkumulator weist die Infrarotheizung den Vorteil auf, dass sie mobil ist und auch in mehreren Fahrzeugen eingesetzt werden kann.

Außerdem kann vorgesehen sein, dass die Infrarotheizung auf die Frontscheibe des Kraftfahrzeuges gerichtet ist. Somit kann eine verschneite oder vereiste Frontscheibe mit einem geringen Energieeinsatz und ohne viel Aufwand von Schnee oder Eis befreit werden. Dabei kann es auch vorgesehen sein, dass die Infrarotheizung im Armaturenbrett des Kraftfahrzeuges intrigiert ist.

Nichts war ich wieder reinstellen 2 und 6 Weitere Merkmale, Einzelheiten und Vorteile der Erfindung ergeben sich aufgrund der nachfolgenden Beschreibung sowie anhand der Zeichnungen. Einander entsprechende Gegenstände oder Elemente sind in allen Figuren mit dem gleichen Bezugszeichen versehen. Es zeigt
Fig. 1 eine Draufsicht einer erfindungsgemäßen Infrarotheizung, wobei der obere Gehäusedeckel nicht dargestellt ist,
Fig. 2 eine Seitenansicht der Stirnseite einer erfindungsgemäßen Infrarotheizung,
Fig. 3 eine Draufsicht einer erfindungsgemäßen Infrarotheizung mit Infrarotreflektoren, wobei der obere Gehäusedeckel nicht dargestellt ist,
Fig. 4 eine mögliche Anordnung der erfindungsgemäßen Infrarotheizung in einem beispielhaften Wohnraum Sowie
Fig. 5 eine Draufsicht einer erfindungsgemäßen Infrarotheizung mit eingebauten Temperaturregler, wobei der obere Gehäusedeckel nicht dargestellt ist.

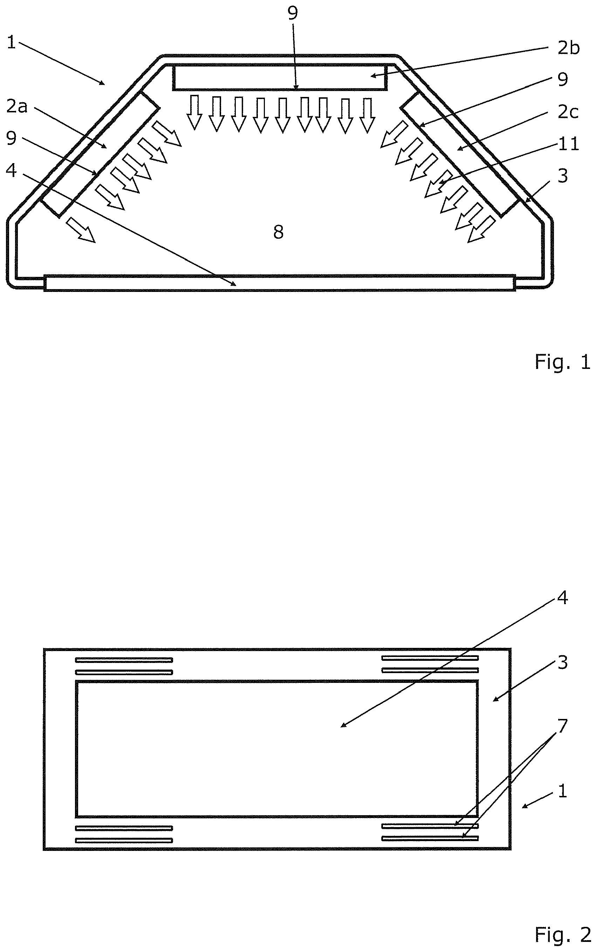

In Fig. 1 ist eine erfindungsgemäße Infrarotheizung 1 gezeigt, die drei Infrarotstrahler 2a, 2b, 2c, ein Gehäuse 3 und eine Frontplatte 4 aufweist. Das Gehäuse 3 weist einen trapezartigen Grundriss auf, wobei die zur längeren Grundseite hin verlaufenden Gehäuseseiten abgestumpft sind. Die Frontplatte 4 ist entlang der längeren Grundseite angeordnet und die Infrarotstrahler 2a, 2b, 2c sind an den kürzeren Gehäuseseiten im inneren des Gehäuses 3 angeordnet. Ferner weist das Gehäuse 3 Belüftungsschlitze 7 auf, die in der Seitenansicht der Stirnseite der Infrarotheizung 1 in Fig. 2 beispielhaft dargestellt sind.

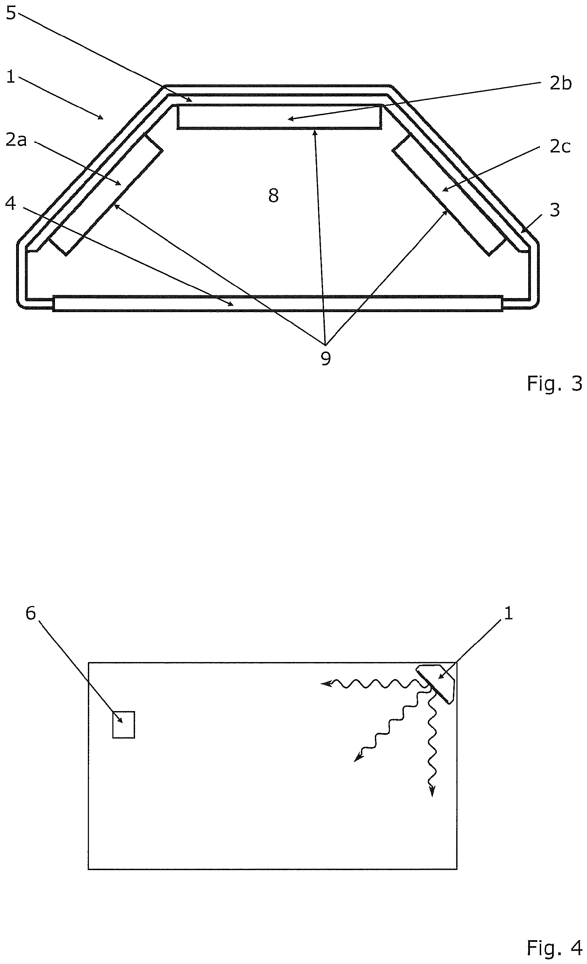

Die Infrarotstrahlung 11 breitet sich von den Infrarotstrahlern 2a, 2b, 2c ausgehend im Gehäuseinnenraum 8 aus und trifft vornehmlich in einem Kreuzungspunkt auf die Frontplatte 4, wobei ein Bruchteil dieser Strahlung an der Oberfläche der Fronplatte 4 reflektiert wird. Die Anordnung des Infrarotstrahler 2a, 2b, 2c und die Geometrie des Gehäuses 3 führen dazu, dass diese reflektierte Strahlung über Mehrfachreflektionen wieder auf die Fronplatte 4 gelenkt wird. Besonders vorteilhaft erweist dabei die Verwendung von Infrarotreflektoren 5, die diesen Effekt weiter unterstützen. Ein solcher Aufbau ist in Fig. 3 dargestellt, wobei der Infrarotreflektor 5 zwischen dem Gehäuse 3 und den Infrarotstrahlern 2a, 2b und 2c angeordnet ist. Alternativ kann jeder Infrarotstrahler mit einem eigenen Infrarotreflektor 5 versehen werden.

In Fig. 4 eine mögliche Anordnung der erfindungsgemäßen Infrarotheizung 1 in einem beispielhaften Wohnraum gezeigt. Durch die besondere Geometrie des Gehäuses 3, kann eine solche Infrarotheizung 1 optimal in Raumecken angeordnet werden. Ein Temperaturfühler 6, der an einem beliebigen Ort im Raum angeordnet ist, übermittelt per Funk die gemessene Raumtemperatur an die Infrarotheizung 1, die mit dieser Information die Raumtemperatur regelt.

Da die von der Infrarotheizung 1 Strahlung in einem großen Raumwinkel emittiert wird, werden die meisten Raumwände direkt erwärmt. Raumwände, die sich nicht im Raumwinkel der Infrarotheizung 1 befinden, werden durch Mehrfachreflektionen der Strahlen erwärmt, da die Strahlung von einer einzelnen Raumwand nicht vollständig absorbiert wird und ein Teil reflektiert wird. Durch diesen Effekt stellt sich eine isotrope Wärmeverteilung im Raum ein. Somit wird eine Bildung von Schwitzwasser an kalten Raumwänden vermieden, was wiederum das Entstehen von gesundheitsgefährdenden Schimmel verhindert.

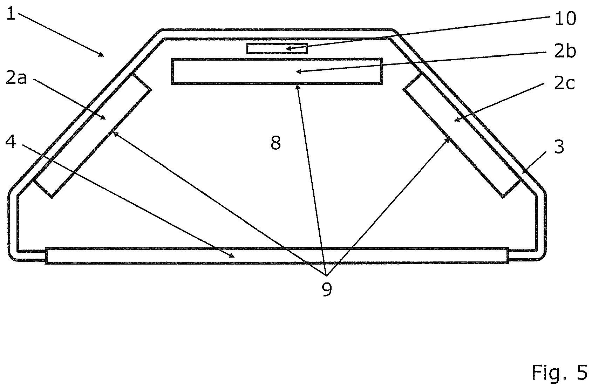

In Fig. 5 ist eine Draufsicht einer erfindungsgemäßen Infrarotheizung 1 mit eingebauten Temperaturregler 10 gezeigt, wobei der obere Gehäusedeckel nicht dargestellt ist. In diesem Ausführungsbeispiel ist der Temperaturregler 10 zwischen dem Infrarotstrahler 2b und dem Gehäuse 3 angeordnet. Somit wird der Temperaturregler 10 nicht durch die Infrarotstrahlung selbst aufgeheizt, sondern im Wesentlichen durch die erhitzte Luft im Gehäuseinnenraum 8. Es ist auch denkbar, dass der Temperaturregler 10 zwischen dem Gehäuse 3 und einen der anderen Infrarotstrahler 2a oder 2b angeordnet ist.

Natürlich ist die Erfindung nicht auf die dargestellten Ausführungsbeispiele beschränkt. Weitere Ausgestaltungen sind möglich, ohne den Grundgedanken der Erfindung zu verlassen. Selbstverständlich sind Stromkabel von der Infrarotheizung zu einer externen Spannungsquelle vorgesehen, die nicht dargestellt sind.

Ferner können auch Batterien, Solaranlagen, Photovoltaik oder Blockheizkraftwerke zur Stromversorgung vorgesehen sein. Es ist bevorzugt, dass die Stromversorgung aus regenerative Energien genutzt wird, wie z.B. Bioenergie, Erdwärme, Wasserkraft, Meeresenergie, Sonnenenergie und Windenergie. Außerdem weist die Infrarotheizung eine geeignete Halterung zur Befestigung an einer Raumwand auf, die nicht dargestellt ist.

### Bezugszeichenliste:

- 1: Infrarotheizung
- 2a: Infrarotstrahler
- 2b: Infrarotstrahler
- 2c: Infrarotstrahler
- 3: Gehäuse
- 4: Frontplatte
- 5: Infrarotreflektor
- 6: Temperaturfühler
- 7: Belüftungsschlitz
- 8: Gehäuseinnenraum
- 9: Abstrahloberfläche
- 10: Temperaturregler
- 11: Infrarotstrahlung

## Patentansprüche

1. Infrarotheizung (1) mit wenigstens einem Infrarotstrahler (2a,2b,2c), der in einem Gehäuse (3) angeordnet ist, wobei das Gehäuse (3) eine Frontplatte (4) aufweist,
**dadurch gekennzeichnet,**
**dass** wenigstens drei Infrarotstrahler (2a,2b,2c) vorgesehen sind, wobei ein erster Infrarotstrahler (2b) parallel zur Frontplatte (4) und ein zweiter und ein dritter Infrarotstrahler (2a,2c) schräg zur Frontplatte (4) ausgerichtet sind, wobei die Infrarotstrahler (2a,2b,2c) eine ebenflächige Abstrahloberfläche (9) aufweisen und den Hauptanteil der entstehenden Infrarotstrahlung (11) in Richtung der Frontplatte (4) emittieren.

2. Infrarotheizung nach Anspruch 1,
**dadurch gekennzeichnet,**
**dass** das Gehäuse (3) einen trapezartigen Grundriss aufweist, wobei die Frontplatte (4) entlang der längeren Grundseite angeordnet ist und die Infrarotstrahler (2a, 2b,2c) an den kürzeren Gehäuseseiten angeordnet sind.

3. Infrarotheizung nach Anspruch 1 und/oder 2,
**dadurch gekennzeichnet,**
**dass** zwischen den Gehäuseseiten und den Infrarotstrahlern (2a,2b,2c) Infrarotreflektoren (5) angeordnet sind.

4. Infrarotheizung nach Anspruch 3,
**dadurch gekennzeichnet,**
**dass** die Infrarotreflektoren (5) als Wellbleche ausgestaltet sind.

5. Infrarotheizung nach einem oder mehreren der Ansprüche 1 bis 4,
**dadurch gekennzeichnet,**
**dass** die Frontplatte (4) die Infrarotstrahlung vollständig absorbiert.

6. Infrarotheizung nach einem oder mehreren der Ansprüche 1 bis 4,
**dadurch gekennzeichnet,**
**dass** die Frontplatte (4) die Infrarotstrahlung teilweise absorbiert.

7. Infrarotheizung nach einem oder mehreren der Ansprüche 1 bis 4,
**dadurch gekennzeichnet,**
**dass** die Frontplatte (4) für Infrarotstrahlung vollständig durchlässig ist.

8. Infrarotheizung nach einem oder mehreren der Ansprüche 1 bis 7,
**dadurch gekennzeichnet,**
**dass** die Infrarotheizung (1) eine Taktschaltung aufweist, die die Infrarotstrahler (2a,2b,2c) periodisch an- und ausschaltet, wobei die Periodendauer frei wählbar ist.

9. Infrarotheizung nach einem oder mehreren der Ansprüche 1 bis 8,
**dadurch gekennzeichnet,**
**dass** die Infrarotheizung (1) einen Temperaturfühler (6) aufweist, der die Raumtemperatur an die Infrarotheizung (1) übermittelt.

10. Infrarotheizung nach Anspruch 9,
**dadurch gekennzeichnet,**
**dass** die Infrarotheizung (1) einen Regelkreis aufweist, der die Raumtemperatur konstant hält.

11. Infrarotheizung nach einem oder mehreren der Ansprüche 1 bis 10,
**dadurch gekennzeichnet,**
**dass** das Gehäuse (3) Belüftungsschlitze (7) aufweist.

12. Infrarotheizung nach einem oder mehreren der Ansprüche 1 bis 11,
**dadurch gekennzeichnet,**
**dass** in dem Gehäuse (3) ein Temperaturregler (10) angeordnet ist, der die im Gehäuse (3) entstehende Temperatur regelt.

13. Infrarotheizung nach Anspruch 12,
**dadurch gekennzeichnet,**
**dass** der Temperaturregler (10) einen Bimetall-Schalter aufweist, der ab einer vordefinierten Grenztemperatur im Gehäuseinnenraum (8) die Spannungsversorgung der Infrarotstrahler (2a,2b,2c) unterbricht.

14. Infrarotheizung nach einem oder mehreren der Ansprüche 1 bis 13,
**dadurch gekennzeichnet,**
**dass** die Infrarotstrahler (2a,2b,2c) pro Stunde nicht länger als 20 Minuten eingeschaltet sind.

15. Infrarotheizung nach einem oder mehreren der Ansprüche 1 bis 14,
**dadurch gekennzeichnet,**
**dass** das Gehäuse (3) eine Kunststoffschicht aufweist.

16. Verwendung einer Infrarotheizung nach einem oder mehreren der Ansprüche 1 bis 15 an oder in einem Kraftfahrzeug.

17. Verwendung einer Infrarotheizung nach Anspruch 16,
**dadurch gekennzeichnet,**
**dass** die Spannungsversorgung der Infrarotheizung über einen Akkumulator erfolgt.

18. Verwendung einer Infrarotheizung nach Anspruch 16 oder 17,
**dadurch gekennzeichnet,**
**dass** die Infrarotheizung auf die Frontscheibe des Kraftfahrzeuges gerichtet ist.

## Claims

1. Infrared heater (1) having at least one infrared emitter (2a, 2b, 2c) that is arranged in a housing (3), wherein the housing (3) has a front plate (4),
**characterised in that**
at least three infrared emitters (2a, 2b, 2c) are provided, wherein a first infrared emitter (2b) is oriented parallel to the front plate (4) and a second and a third infrared emitter (2a, 2c) are oriented at a slant relative to the front plate (4), wherein the infrared emitters (2a, 2b, 2c) have a planar emission surface (9) and emit the major portion of the infrared radiation (11) that occurs in the direction of the front plate (4).

2. Infrared heater according to claim 1,
**characterised in that**
the housing (3) has a trapezoid-like layout, wherein the front plate (4) is arranged along the longer base side, and the infrared emitters (2a, 2b, 2c) are arranged on the shorter housing sides.

3. Infrared heater according to claim 1 and/or 2,
**characterised in that**
infrared reflectors (5) are arranged between the housing sides and the infrared emitters (2a, 2b, 2c).

4. Infrared heater according to claim 3,
**characterised in that**
the infrared reflectors (5) are configured as corrugated metal sheets.

5. Infrared heater according to one of more of claims 1 to 4,
**characterised in that**
the front plate (4) completely absorbs the infrared radiation.

6. Infrared heater according to one of more of claims 1 to 4,
**characterised in that**
the front plate (4) partially absorbs the infrared radiation.

7. Infrared heater according to one of more of claims 1 to 4,
**characterised in that**
the front plate (4) is completely permeable to infrared radiation.

8. Infrared heater according to one of more of claims 1 to 7,
**characterised in that**
the infrared heater (1) has a cycling circuit, which turns the infrared emitters (2a, 2b, 2c) on and off periodically, wherein the period duration can be freely selected.

9. Infrared heater according to one of more of claims 1 to 8,
**characterised in that**
the infrared heater (1) has a temperature sensor (6) that transmits the room temperature to the infrared heater (1).

10. Infrared heater according to claim 9,
**characterised in that**
the infrared heater (1) has a regulation circuit that keeps the room temperature constant.

11. Infrared heater according to one of more of claims 1 to 10,
**characterised in that**
the housing (3) has ventilation slits (7).

12. Infrared heater according to one of more of claims 1 to 11,
**characterised in that**
a temperature regulator (10) is arranged in the housing (3), which regulator regulates the temperature that occurs in the housing (3).

13. Infrared heater according to claim 12,
**characterised in that**
the temperature regulator (10) has a bimetallic switch that interrupts the power supply to the infrared emitters (2a, 2b, 2c) starting from a predefined threshold temperature in the housing interior (8).

14. Infrared heater according to one of more of claims 1 to 13,
**characterised in that**
the infrared emitters (2a, 2b, 2c) are not turned on for longer than 20 minutes per hour.

15. Infrared heater according to one of more of claims 1 to 14,
**characterised in that**
the housing (3) has a plastic layer.

16. Use of an infrared heater according to one of more of claims 1 to 15 on or in a motor vehicle.

17. Use of an infrared heater according to claim 16,
**characterised in that**
power is supplied to the infrared heater by way of a rechargeable battery.

18. Use of an infrared heater according to claim 16 or 17,
**characterised in that**
the infrared heater is directed at the windshield of the motor vehicle.

## Revendications

1. Chauffage à infrarouge (1) avec au moins un radiateur à infrarouge (2a, 2b, 2c) qui est disposé dans un boîtier (3), le boîtier (3) ayant une plaque avant (4),
**caractérisé en ce que**
au moins trois radiateurs à infrarouge (2a, 2b, 2c) sont prévus, un premier radiateur à infrarouge (2b) étant disposé parallèlement à la plaque avant (4) et un deuxième et un troisième radiateurs à infrarouge (2a, 2c) étant disposés dans une direction oblique par rapport à la plaque avant (4), les radiateurs à infrarouge (2a, 2b, 2c) présentant une surface de rayonnement plane (9) et émettant la majeure partie du rayonnement infrarouge (11) généré en direction de la plaque avant (4).

2. Chauffage à infrarouge selon la revendication 1,
**caractérisé en ce que**
le boîtier (3) a un plan de base trapézoïdal, la plaque avant (4) étant disposée le long du côté de base plus long et les radiateurs à infrarouge (2a, 2b, 2c) étant disposés sur les côtés du boîtier plus courts.

3. Chauffage à infrarouge selon la revendication 1 et/ou 2,
**caractérisé en ce que**
des réflecteurs à infrarouge (5) sont disposés entre les côtés du boîtier et les radiateurs à infrarouge (2a, 2b, 2c).

4. Chauffage à infrarouge selon la revendication 3,
**caractérisé en ce que**
les réflecteurs à infrarouge (5) sont réalisés sous forme de tôles ondulées.

5. Chauffage à infrarouge selon une ou plusieurs des revendications 1 à 4,
**caractérisé en ce que**
la plaque avant (4) absorbe totalement le rayonnement infrarouge.

6. Chauffage à infrarouge selon une ou plusieurs des revendications 1 à 4,
**caractérisé en ce que**
la plaque avant (4) absorbe partiellement le rayonnement infrarouge.

7. Chauffage à infrarouge selon une ou plusieurs des revendications 1 à 4,
**caractérisé en ce que**
la plaque avant (4) est totalement transparente au rayonnement infrarouge.

8. Chauffage à infrarouge selon une ou plusieurs des revendications 1 à 7,
**caractérisé en ce que**
le chauffage à infrarouge (1) présente un circuit d'horloge qui allume et éteint périodiquement les radiateurs à infrarouge (2a, 2b, 2c), la période étant librement sélectionnable.

9. Chauffage à infrarouge selon une ou plusieurs des revendications 1 à 8,
**caractérisé en ce que**
le chauffage à infrarouge (1) présente une sonde de température (6) qui transmet la température ambiante au chauffage à infrarouge (1).

10. Chauffage à infrarouge selon la revendication 9,
**caractérisé en ce que**
le chauffage à infrarouge (1) présente un circuit de régulation qui maintient la température ambiante constante.

11. Chauffage à infrarouge selon une ou plusieurs des revendications 1 à 10,
**caractérisé en ce que**
le boîtier (3) présente des fentes de ventilation (7).

12. Chauffage à infrarouge selon une ou plusieurs des revendications 1 à 11,
**caractérisé en ce que**
un régulateur de température (10) est disposé dans le boîtier (3), qui régule la température causée dans le boîtier (3).

13. Chauffage à infrarouge selon la revendication 12,
**caractérisé en ce que**
le régulateur de température (10) présente un interrupteur bimétallique qui interrompt l'alimentation en tension des radiateurs à infrarouge (2a, 2b, 2c) à partir d'une température limite prédéfinie à l'intérieur du boîtier (8).

14. Chauffage à infrarouge selon une ou plusieurs des revendications 1 à 13,
**caractérisé en ce que**
les radiateurs à infrarouge (2a, 2b, 2c) ne sont pas allumés pendant plus de 20 minutes par heure.

15. Chauffage à infrarouge selon une ou plusieurs des revendications 1 à 14,
**caractérisé en ce que**
le boîtier (3) présente une couche de plastique.

16. Utilisation d'un chauffage à infrarouge selon une ou plusieurs des revendications 1 à 15 sur ou dans un véhicule à moteur.

17. Utilisation d'un chauffage à infrarouge selon la revendication 16,
**caractérisé en ce que**
le chauffage à infrarouge est alimenté en tension par l'intermédiaire d'un accumulateur.

18. Utilisation d'un chauffage à infrarouge selon la revendication 16 ou 17,
**caractérisé en ce que**
le chauffage à infrarouge est orienté vers le pare-brise du véhicule à moteur.
